(19) **Europäisches Patentamt / European Patent Office / Office européen des brevets**

(11) **EP 4 722 285 A1**

(12) **EUROPEAN PATENT APPLICATION**
published in accordance with Art. 153(4) EPC

(43) Date of publication:
08.04.2026 Bulletin 2026/15

(21) Application number: 24815355.3

(22) Date of filing: 23.05.2024

(51) International Patent Classification (IPC):
C08L 1/02 (2006.01)    C08J 3/215 (2006.01)
C08K 3/38 (2006.01)    C08K 5/053 (2006.01)
C08L 101/00 (2006.01)    D06M 11/82 (2006.01)
D06M 13/144 (2006.01)

(52) Cooperative Patent Classification (CPC):
C08J 3/215; C08K 3/38; C08K 5/053; C08L 1/02;
C08L 101/00; D06M 11/82; D06M 13/144

(86) International application number:
PCT/JP2024/018975

(87) International publication number:
WO 2024/247871 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023089402

(71) Applicant: Polyplastics Co., Ltd.
Tokyo 108-8280 (JP)

(72) Inventors:
• ITAKURA, Masahiko
  Tokyo 108-8280 (JP)
• SHOMURA, Hiroki
  Fuji-shi, Shizuoka 416-8533 (JP)
• IMANISHI, Shinichiro
  Himeji-shi, Hyogo 671-1281 (JP)

(74) Representative: Winter, Brandl - Partnerschaft
mbB
Alois-Steinecker-Straße 22
85354 Freising (DE)

(54) **REGENERATED CELLULOSE FIBER FOR RESIN REINFORCEMENT, METHOD FOR PRODUCING DISCOLORATION-INHIBITED REGENERATED CELLULOSE FIBER, RESIN COMPOSITION, PELLET AND METHOD FOR PRODUCING SAME, AND MOLDED ARTICLE**

(57)    A first problem is to provide a discoloration-inhibited regenerated cellulose fiber for resin reinforcement. A second problem is to provide a resin composition, etc. including a regenerated cellulose fiber, in which appearance defects due to heating are unlikely to occur. A third problem is to provide a method for producing a discoloration-inhibited regenerated cellulose fiber. The first problem can be solved by a regenerated cellulose fiber for resin reinforcement, including at least one compound (A) selected from a monohydric or polyhydric alcohol and a weak acid. The second problem can be solved by a resin composition including: a regenerated cellulose fiber including at least one compound (A) selected from a monohydric or polyhydric alcohol and a weak acid; and a thermoplastic resin or a thermosetting resin. The third problem can be solved by a method for producing a regenerated cellulose resin, including heating the regenerated cellulose fiber at 200-300°C.

[FIG. 1]

**Description**

**TECHNICAL FIELD**

The present invention relates to: a regenerated cellulose fiber for resin reinforcement; a method for producing a discoloration-inhibited regenerated cellulose fiber; a resin composition; a pellet and a method for producing the same; and a molded article.

**BACKGROUND**

Cellulose fibers are fibers that include cellulose, which is the main constituent component of wood, and are classified into plant fibers, regenerated fibers (regenerated cellulose fibers), semi-synthetic fibers, and cellulose nanofibers, etc. Such cellulose fibers are not limited to uses such as for clothing, etc., and are widely used as industrial raw materials for foods, cosmetics, and functional paper, etc.

Regenerated cellulose fibers can be produced by various different methods such as a viscose method, a cuprammonium method, and a solvent method, etc. In recent years, owing to an increase in environmental awareness, regenerated cellulose fibers that use cellulose, which is a biomass-derived material, as a raw material are employed as resin modifiers and reinforcers (for example, Patent Document 1, etc.).

Known methods for cases in which regenerated cellulose fibers are used as a resin reinforcer include: a method in which short fibers of regenerated cellulose are arranged in a resin to obtain a regenerated cellulose fiber-reinforced resin composition; and a method in which continuous fibers of regenerated cellulose are impregnated with a resin and then cut into desired lengths to obtain a resin material reinforced by regenerated cellulose fibers (resin-impregnated fiber bundle), etc. Meanwhile, regenerated cellulose fibers have low thermal stability and suffer performance degradation in which the appearance thereof deforms and becomes discolored due to heating. Due thereto, for a resin composition including regenerated cellulose fibers, for example, there are cases of appearance defects occurring wherein the regenerated cellulose fibers discolor due to being heated when preparing the resin composition and/or when obtaining a molded article of the resin composition.

Patent Document 1: JP 2017-95831 A

**SUMMARY OF INVENTION**

A first problem addressed by the present invention is to provide a discoloration-inhibited regenerated cellulose fiber for resin reinforcement.

A second problem is to provide: a resin composition which includes regenerated cellulose fibers and in which appearance defects due to heating are unlikely to occur; pellets of the composition and a method for producing the same; and a molded article.

A third problem is to provide a method for producing a discoloration-inhibited regenerated cellulose fiber.

That is, the present invention has the following aspects.

[1] A regenerated cellulose fiber for resin reinforcement, the fiber including at least one compound (A) selected from a monohydric or polyhydric alcohol and a weak acid.

[2] The regenerated cellulose fiber described in [1], wherein the ratio of the compound (A) with respect to 100 parts by mass of the regenerated cellulose fiber is 0.01-20 parts by mass.

[3] The regenerated cellulose fiber described in [1] or [2], wherein the alcohol includes glycerin and the weak acid includes boric acid.

[4] A resin composition including: a regenerated cellulose fiber including at least one compound (A) selected from a monohydric or polyhydric alcohol and a weak acid; and a thermoplastic resin.

[5] A resin composition including: a regenerated cellulose fiber including at least one compound (A) selected from a monohydric or polyhydric alcohol and a weak acid; and a thermosetting resin.

[6] The resin composition described in [4] or [5], wherein the ratio of the compound (A) with respect to 100 parts by mass of the regenerated cellulose fiber is 0.01-20 parts by mass.

[7] The resin composition described in any of [4] to [6], wherein the alcohol includes glycerin and the weak acid includes boric acid.

[8] A pellet of the resin composition described in [4], [6], or [7].

[9] A molded article of the resin composition described in any one of [4] to [7].

[10] A method for producing a discoloration-inhibited regenerated cellulose fiber,
the method including heating the regenerated cellulose fiber described in any of [1] to [3] at 200-300°C.

[11] The method for producing a regenerated cellulose fiber described in [10], wherein the heating includes applying a thermal load of 200-300°C to at least a surface of the regenerated cellulose fiber.

[12] A method for producing the pellet described in [8], wherein the method comprises:

impregnating the regenerated cellulose fiber with the thermoplastic resin, which is melted; or

melt-kneading the regenerated cellulose fiber and the thermoplastic resin.

[13] The method for producing a pellet described in [12], wherein the temperature of the melted thermoplastic resin or the temperature at the time of the melt-kneading is 200-300°C.

[14] The method for producing a pellet described in [12] or [13], wherein the impregnating of the melted thermoplastic resin or the melt-kneading includes reacting the regenerated cellulose fibers and the compound (A).

According to the present invention, it is possible to solve the first to third problems described above. That is, it is possible to provide a discoloration-inhibited regenerated cellulose fiber for resin reinforcement. Further, it is possible to provide: a resin composition which includes regenerated cellulose fibers and in which appearance defects due to heating are unlikely to occur; pellets of the composition and a method for producing the same; and a molded article. Furthermore, it is possible to provide a method for producing a discoloration-inhibited regenerated cellulose fiber.

## BRIEF DESCRIPTION OF DRAWINGS

FIG. 1 shows photographs of regenerated cellulose fibers of Example 2 and Comparative Example 2 after heating.

FIG. 2 shows photographs of pellets of Example 3 and Comparative Example 3 before heating.

FIG. 3 shows photographs of pellets of Example 3 and Comparative Example 3 after heating.

## DESCRIPTION OF EMBODIMENTS

Hereinafter, embodiments of the present disclosure will be explained in detail. However, the scope of the present disclosure is not limited to any one embodiment explained here, and various modifications can be made within a scope not departing from the gist of the present disclosure. The various embodiments described herein may be combined with any other feature described herein. Further, with respect to specific parameters, in cases in which multiple upper limit values and lower limit values are described, a suitable numerical value range can be obtained by combining any upper limit value and lower limit value among the upper limit values and lower limit values that are described. Further, the lower limit value and/or the upper limit value of the numerical value ranges described herein may be replaced with numerical values that are within the numerical value ranges described and that are indicated in the examples. The expression "X-Y" indicating a numerical value range means "X or more and Y or less". In cases where a specific explanation provided for one embodiment also applies to another embodiment, the explanation may be omitted for the other embodiment.
The various configurations in the examples and combinations thereof, etc., are examples. Additions, omissions, substitutions and other modifications can be made to the configurations, as appropriate, within a scope not departing from the gist of the present disclosure. The present disclosure is not limited to the embodiments described below.
The various embodiments described herein may be combined with any other feature described herein.
A first embodiment of the present invention relates to a regenerated cellulose fiber for resin reinforcement.

[Regenerated cellulose fiber for resin reinforcement]

The first embodiment relates to a regenerated cellulose fiber for resin reinforcement, the fiber including at least one compound (A) selected from a monohydric or polyhydric alcohol and a weak acid. The regenerated cellulose fiber according to the first embodiment is less likely to discolor than conventional regenerated cellulose fibers when heated. Due thereto, when blended in a resin as a resin reinforcer, discoloration is unlikely to occur due to heating when a resin composition is prepared or when the resin composition is molded.

<Compound (A)>

The regenerated cellulose according to first embodiment includes at least one compound (A) selected from a monohydric or polyhydric alcohol and a weak acid.

The monohydric or polyhydric alcohol is preferably an alcohol having, for example, a carbon number of 1-20. Specific examples thereof include: monohydric alcohols such as methanol, ethanol, propanol, isopropanol, butanol, ethylene glycol monomethyl ether, diethylene glycol monomethyl ether, benzyl alcohol, and phenethyl alcohol, etc.; chain-like polyhydric alcohols such as mannitol, glycerin, erithritol, pentaerythritol, xylitol, glucitol, and ethylene glycol, etc.; and phenols such as phenol, paracresol, metacresol, orthocresol, ethylphenol, guaiacol, and catechol, etc. The foregoing may be used alone or as a combination of two or more. Among the foregoing, from the viewpoint that it is easy to suppress discoloration of fibers during heating, it is preferable that glycerin, mannitol, methanol, erithritol, or ethylene glycol is included, and it is more preferable that glycerin, mannitol, or erithritol is included.

Examples of a weak acid include acetic acid, boric acid, and boric acid compounds, etc. Among the foregoing, it is more preferable that boric acid or a boric acid compound is included, with boric acid being even more preferable.

Examples of a boric acid compound include: boric acid salts such as alkali metal salts, alkaline earth metal salts, and metallic salts, etc.; metaboric acid and salts thereof; and polyboric acid and salts thereof, etc. The foregoing boric acid compounds may be used alone or as a combination of two or more.

In one embodiment, the regenerated cellulose fiber preferably includes, as the compound (A), at least one selected from glycerin and boric acid, and more preferably includes glycerin or boric acid. In one embodiment, at least one selected from boric acid, glycerin, pentaerythritol, and mannitol may be included as the compound (A).

In one embodiment, the ratio of the compound (A) with respect to 100 parts by mass of the regenerated cellulose fiber is preferably 0.1-20 parts by mass, more preferably 0.3-15 parts by mass, and even more preferably 0.5-15 parts by mass. If the ratio of the compound (A) is within the ranges described above, when blended in a resin as a resin reinforcer, fibers are unlikely to discolor due to heating when a resin composition is prepared and/or when the resin composition is molded. In one embodiment, the ratio of the compound (A) with respect to 100 parts by mass of the regenerated cellulose fiber may be within the range of 0.01-20 parts by mass, may be in the range of 0.03-15 parts by mass, and may be in the range of 0.05-10 parts by mass.

In one embodiment, the regenerated cellulose fiber may be a continuous fiber, may be a short fiber, and may be a spun fiber in which short fibers are twisted and joined lengthwise in a thread form.

The method for producing the regenerated cellulose fiber is also not particularly limited. For example, the regenerated cellulose fibers may be continuous fibers such as viscose rayon or cupra obtained from regenerated cellulose, or continuous fibers such as Lyocell obtained from regenerated cellulose using a solvent method with a solvent such as an ionic liquid.

The average fiber diameter of the regenerated cellulose fiber is also not particularly limited. From the viewpoint as a resin reinforcer, the average fiber diameter of the regenerated cellulose fiber may be 5-50 μm and may be 7-30 μm. Note that for the average fiber diameter of the regenerated cellulose fiber, it is possible to employ an average value of the major axis of a fiber cross section measured with a microscope.

In the regenerated cellulose fiber according to the first embodiment, the compound (A) is preferably attached to the surface of at least some of the regenerated cellulose fiber. Further, some of the compound (A) may react with a reducing terminal or a hydroxyl group of the regenerated cellulose fiber. For example, when glycerin is included as the compound (A), there may be a state in which all of the glycerin included in the regenerated cellulose fiber is attached to (coated on) at least some of the fiber surface, or there may be a state in which some of the glycerin has reacted with a reducing terminal of the regenerated cellulose and the remainder of the glycerin is attached to at least some of the fiber surface. Further, when a weak acid (preferably boric acid) is included, there may be a state in which all of the weak acid is attached to (coated on) at least some of the fiber surface, or there may be a state in which some of the weak acid has reacted with a hydroxyl group of the regenerated cellulose and the remainder of the weak acid is attached to at least some of the fiber surface.

The regenerated cellulose fiber according to the first embodiment includes the compound (A), and due thereto, when heated in a resin composition, the compound (A) reacts with a reducing terminal or a hydroxyl group of the regenerated cellulose and it is inferred that, as a result thereof, stability with respect to heat improves. That is, when a resin composition including such a regenerated cellulose fiber is heated (for example, when performing melt-kneading in order to prepare a resin composition or when performing a heating process in order to obtain a molded article, etc.), depending on the temperature, the compound (A) reacts with a reducing terminal or a hydroxyl group of the regenerated cellulose fiber and it is possible to inhibit discoloration of the fiber when heated. Such a regenerated cellulose fiber can be used suitably as a resin reinforcer.

<Method for producing regenerated cellulose fiber for resin reinforcement>

A preferred method for producing the regenerated cellulose fiber according to the first embodiment, from the viewpoint that the compound (A) is blended effectively in the regenerated cellulose fiber (preferably the compound (A) is attached to at least some of the fiber surface), is a method in which the regenerated cellulose fiber (raw material fiber) is immersed in the compound (A) or in an aqueous medium including the compound (A) and then dried, or in which the compound (A) alone or an aqueous medium including the compound (A) is dripped (including spraying) onto the raw material fiber and then dried. Below, there is an explanation regarding one embodiment of a method for producing the regenerated cellulose fiber according to the first embodiment.

When producing a regenerated cellulose fiber including a monohydric or polyhydric alcohol, preferably glycerin, as the compound (A), it is preferable to immerse a raw material fiber in the compound (A) or to drip the compound (A) alone onto the raw material fiber and then dry the raw material fiber.

When producing a regenerated cellulose fiber including a weak acid, preferably boric, as the compound (A), it is preferable to immerse the raw material fiber in an aqueous medium including the compound (A) or to drip an aqueous medium including the compound (A) onto the raw material fiber and then dry the raw material fiber.

When using an aqueous medium including the compound (A), the aqueous medium may be an aqueous solution of the compound (A) or may be an emulsion (dispersion liquid) in which the compound (A) is dispersed. Further, the water component included in the aqueous medium may be pure water, may be ion-exchanged water, may be tap water or industrial water, or may be a mixture thereof. From the viewpoint of cost, the water component is preferably tap water or industrial water. Further, the aqueous medium may also include a component other than the water component described above and the compound (A).

In one embodiment, the ratio of the compound (A) with respect to the total mass of the aqueous medium is preferably 0.1-50 mass%, more preferably 0.3-15 mass%, and particularly preferably 0.3-10 mass%. By using an aqueous medium in which the concentration of the compound (A) is within the foregoing ranges, the ratio of the compound (A) with respect to 100 parts by mass of the regenerated cellulose fiber that is ultimately obtained is easily controlled so as to be in the range of 0.01-20 parts by mass.

The temperature of the aqueous medium is not particularly limited and can be set in accordance with the solubility of the compound (A) in the water component. For example, when boric acid is used as the compound (A), the saturated aqueous solution concentration of boric acid at 20°C is less than 5 mass%. As such, when, for example, a 9 mass% boric acid aqueous solution is to be made, the temperature of the aqueous medium is preferably set to 50°C or more.

When a raw material fiber is immersed in an aqueous medium including the compound (A) or when the aqueous medium is dripped onto the raw material fiber, it is preferable to adjust the amount of aqueous medium that is absorbed by the raw material fiber and the amount of aqueous medium that is present around the raw material fiber. Specifically, the "ratio of the aqueous medium with respect to the total mass of the raw material fiber before being immersed in the aqueous medium or before the aqueous medium is dripped thereon" (hereinafter referred to as "aqueous medium ratio") is preferably adjusted so as to be 200 mass% or less. By adjusting the aqueous medium ratio so as to be 200 mass% or less and then drying, drying efficiency is likely to improve, and further, the discoloration-inhibition effect of the regenerated cellulose fiber that is ultimately obtained is likely to improve.

In one embodiment, the aqueous medium ratio may be adjusted so as to be 150 mass% or less and may be adjusted so as to be 100 mass% or less. Further, the lower limit thereof is preferably 10 mass%. That is, the aqueous medium ratio may be adjusted so as to be 10-200 mass%, may be adjusted so as to be 10-150 mass%, and may be adjusted so as to be 10-100 mass%.

The method for adjusting the aqueous medium ratio is not particularly limited. The raw material fiber is preferably dewatered by, for example, compression dewatering, centrifugal dewatering, or vibration dewatering, etc.

Following the processes described above, the raw material fiber is dried to obtain the regenerated cellulose fiber according to the first embodiment. The drying temperature is preferably from room temperature (approximately 15-25°C) to 300°C and more preferably 20-260°C.

Other embodiments of the regenerated cellulose fiber according to the first embodiment relate to a use of or a method of using, as a resin reinforcer, a regenerated cellulose fiber including at least one compound (A) selected from a monohydric or polyhydric alcohol and a weak acid. A method of using the regenerated cellulose fiber according to the first embodiment as a resin reinforcer includes mixing the regenerated cellulose fiber according to the first embodiment and at least one resin selected from a thermoplastic resin and a thermosetting resin. Note that the details of the usage method are explained in the method for producing a resin composition in a second embodiment.

Next, details of a second embodiment will be described. The second embodiment relates to: a resin composition which includes a regenerated cellulose fiber; pellets of the resin composition and a method for producing the same; and a molded article.

[Resin composition including generated cellulose fiber]

The second embodiment relates to a resin composition including: a regenerated cellulose fiber including at least one compound (A) selected from a monohydric or polyhydric alcohol and a weak acid; and a thermoplastic resin. Further, the second embodiment relates to a resin composition including: a regenerated cellulose fiber including at least one compound (A) selected from a monohydric or polyhydric alcohol and a weak acid; and a thermosetting resin.

Hereinafter, the resin composition including a thermoplastic resin is referred to as "resin composition (I)". Further, the resin composition including a thermosetting resin is referred to as "resin composition (II)".

<Resin composition (I)>

Resin composition (I) according to the second embodiment includes: a regenerated cellulose fiber including at least one compound (A) selected from a monohydric or polyhydric alcohol and a weak acid; and a thermoplastic resin. For resin composition (I), it is unlikely that appearance defects occur due to heating when preparing resin composition (I) and when obtaining a molded article of resin composition (I).

<Resin composition (II)>

Resin composition (II) according to the second embodiment includes: a regenerated cellulose fiber including at least one compound (A) selected from a monohydric or polyhydric alcohol and a weak acid; and a thermosetting resin. For resin composition (II), it is unlikely that appearance defects occur due to heating when obtaining a molded article of resin composition (II).

Note that herein, "appearance defects occurring due to heating" includes resin composition (I) or (II) becoming yellower than before being heated or the regenerated cellulose fiber included in composition (I) or (II) becoming discolored and color unevenness occurring in the resin composition as a whole when resin composition (I) or (II) is heated at certain temperature (200-300°C).

(Regenerated cellulose fiber)

The regenerated cellulose fiber according to the first embodiment can be preferably used as the regenerated cellulose fiber included in composition (I) and (II), and preferred aspects thereof are also the same. That is, the monohydric or polyhydric alcohol is preferably glycerin and the weak acid is preferably boric acid.

The ratio of the compound (A) included in the regenerated cellulose fiber is preferably 0.1-20 parts by mass, more preferably 0.3-15 parts by mass, and even more preferably 0.5-15 parts by mass with respect to 100 parts by mass of the regenerated cellulose fiber. Due to including a regenerated cellulose fiber in which the ratio of the compound (A) is within the ranges described above, appearance defects due to heating are unlikely to occur. Further, the weight loss rate due to heating decomposition is also likely to be low. In one embodiment, the ratio of the compound (A) with respect to 100 parts by mass of the regenerated cellulose fiber may be within the range of 0.01-20 parts by mass, may be in the range of 0.03-15 parts by mass, and may be in the range of 0.05-10 parts by mass.

(Thermoplastic resin)

Examples of thermoplastic resins include styrene-based resins, acrylic resins, aliphatic or aromatic polycarbonate-based resins, aliphatic or aromatic polyester-based resins (polyethylene terephthalate, polylactic acid, etc.), chain-type polyolefin-based resins, cyclic olefin-based resins, aliphatic or aromatic polyamide-based resins, polyphenylene ether-based resins, polyvinyl alcohol-based resins, polyoxyalkylene-based resins, polyphenylene sulfide-based resins, thermoplastic polyimide-based resins, polyacetal-based resins, polysulfone-based resins, amorphous fluorine-based resins, and epoxy-based resins, etc. The foregoing thermoplastic resins may be used alone or as a combination of two or more.

Note that the thermoplastic resin may be a biodegradable resin. When a biodegradable resin is included as the thermoplastic resin, the biodegradability of resin composition (I) increases and is more likely to be an environmentally-friendly resin composition. Examples of biodegradable resins include cellulose ester, starch-polyester, polylactic acid (PLA), poly(3-hydroxybutyrate-co-3-hydroxyhexanoate) (PHBH), polylactic acid/polycaprolactone copolymers, polyglycolic acid (PGA), polylactic acid/polyether copolymers, butanediol/long-chain dicarboxylic acid copolymers, polybutylene adipate/terephthalate (PBAT), polytetramethylene adipate-co-terephthalate, polyethylene terephthalate succinate (PETS), polybutylene succinate (PBS), polybutylene succinate adipate (PBSA), and polyvinyl alcohol (PVA), etc. The foregoing biodegradable resins may be used alone or as a combination of two or more.

More preferred examples of the thermoplastic resin include one or more selected from the group consisting of polyolefins (polyethylene, polypropylene, etc.), polyesters (polyethylene terephthalate, polylactic acid, etc.), polyamides (PA6, PA66, PA4, PA12, aromatic polyamides, etc.), polyacrylonitriles, polymethylmethacrylates, polystyrenes, polyvinyl alcohols, polyphenylene ethers, polyoxymethylenes, and polyphenylene sulfides.

In one embodiment, when the thermoplastic resin is crystalline, the melting point thereof may be 80-300°C, may be 90-300°C, may be 100-300°C, may be 150-280°C, and may be 150-260°C. Note that herein, melting point indicates a peak top temperature of an endothermic peak (when two or more peaks are present, the highest temperature peak) that appears when the temperature is increased at a temperature increase rate of 10°C/minute using a differential scanning calorimeter (DSC).

(Thermosetting resin)

Examples of the thermosetting resin include phenol resin, urea resin, melamine resin, benzoguanamine resin, alkyd resin, unsaturated polyester resin, vinyl ester resin, diallyl (tere)phthalate resin, epoxy resin, silicone resin, urethane resin, furan resin, ketone resin, xylene resin, and thermosetting polyimide resin, etc. The foregoing may be used alone or as a combination of two or more.

The ratio of the regenerated cellulose fiber in resin composition (I) or (II) can be set arbitrarily in accordance with desired physical properties but in one embodiment, may be 1-50 mass% and may be 5-40 mass% with respect to the total mass of resin composition (I) or (II).

A publicly-known additive may be blended in resin composition (I) and (II) according to the second embodiment as necessary. Examples of additives include stabilizers (anti-oxidants such as hindered phenol anti-oxidants, etc., anti-shrink agents, anti-static agents, ultraviolet absorbers, thermal stabilizers, and weathering stabilizers, etc.), glidants, mold release agents, lubricants, impact modifiers, colorants (dyes and pigments, etc.), plasticizers, dispersing agents, flame retardants, antibacterial agents, antiseptic agents, fungicides, insecticides, deodorizers, crystallization promoters, crystal nucleating agents, and foaming agents, etc. The foregoing may be used alone or as a combination of two or more.

<Method for producing resin composition (I)>

Resin composition (I) can be produced by mixing the regenerated cellulose fiber and a thermoplastic resin using a conventional and publicly-known method.

<Pellet and method for producing same>

Resin composition (I) may be a pellet. A preferred method for producing the pellet is a method that includes impregnating the melted thermoplastic resin into the regenerated cellulose fiber or melt-kneading the regenerated cellulose fiber and the thermoplastic resin.

When employing a method that includes impregnating (melting and impregnating) the melted thermoplastic resin into the regenerated cellulose fiber, the thermoplastic resin is preferably melted and impregnated into a continuous fiber bundle of the regenerated cellulose and then cut to a desired length to obtain pellets.

In one embodiment, the temperature of the melted thermoplastic resin is preferably 200-300°C and more preferably 200-280°C. Further, it is more preferable to react the regenerated cellulose fibers and the compound (A) by impregnating the melted thermoplastic resin.

When employing a method that includes melt-kneading the regenerated cellulose fiber and the thermoplastic resin, the regenerated cellulose fiber and the thermoplastic resin are preferably loaded into an extruder, melt-kneaded at 200-300°C, and then cut into strand-like objects using a pelletizing method, etc., to obtain pellets. The melt-kneading temperature is more preferably 200-280°C. Further, it is more preferable that the regenerated cellulose fibers and the compound (A) are caused to react by the melt-kneading.

<Method for producing resin composition (II)>

Resin composition (II) can be produced by mixing the regenerated cellulose fiber and the thermosetting resin described above using a conventional and publicly-known method.

<Molded article>

A molded article according to the second embodiment is obtained by molding resin composition (I) or (II) described above by a publicly-known molding method such as injection molding, etc. For the resin composition according to the second embodiment, it is unlikely that appearance defects occur due to heating during molding. Due thereto, such a molded article can be suitably used in various different fields such as automobiles, electric and electronics, office automation equipment, home appliances, and general merchandise, etc.

The molded article according to the second embodiment also has a characteristic wherein fiber dispersibility is good in comparison with molded articles that include a regenerated cellulose fiber other than that of the first embodiment.

When injection-molding a long-fiber-containing resin composition, the long fibers are likely to entwine inside the molded article, and the entwined fibers are in a state of being compressed/pressed inside the molded article. When the molded article is heated and the matrix resin softens, the pressed entwined fibers expand. That is, the entwined fibers expand in the same manner as a spring that was being pressed (had a load acting thereon) is released from the load and extends upwardly. Due to the expansion, the molded article itself also expands. Surprisingly, it was ascertained that the resin composition according to the second embodiment has improved fiber dispersibility. Even more surprisingly, it was discovered that in molded articles of the resin composition, fibers have better dispersibility and entwine to a lesser degree compared to molded articles of resin compositions which include regenerated cellulose fibers but do not include the compound (A), and therefore, the thermal expansion coefficient during heating is likely to become extremely low.

Next, details of a third embodiment will be described. The third embodiment relates to a method for producing a discoloration-inhibited regenerated cellulose fiber.

[Method for producing discoloration-inhibited regenerated cellulose]

The third embodiment relates to a method for producing a regenerated cellulose fiber, the method including heating the regenerated cellulose fiber according to the first embodiment at 200-300°C. The regenerated cellulose fiber obtained by the production method according to the third embodiment is a fiber in which discoloration is inhibited to a greater extent than in conventional regenerated cellulose fibers.

In the third embodiment, the method for heating the regenerated cellulose fiber is not particularly limited. The regenerated cellulose fiber may be heated in a heating device such as an oven, etc., a melted resin having a temperature of 200-300°C may be impregnated into the regenerated cellulose fiber, or the regenerated cellulose fiber and a thermoplastic resin may be melt-kneaded at 200-300°C, etc.

In one embodiment, the heating preferably includes applying a thermal load of 200-300°C to at least a surface of the regenerated cellulose fiber. Here, "applying a thermal load" includes not only heating the regenerated cellulose fiber itself using an oven, etc., but also includes bringing the regenerated cellulose fiber into contact with a melted resin to heat the fiber surface or the fiber interior. By undergoing such a process, a reducing terminal or hydroxyl group of the regenerated cellulose fiber reacts with the compound (A) and it is inferred that, as a result thereof, discoloration of the regenerated cellulose fiber is inhibited.

**EXAMPLES**

Examples are provided below to explain the present disclosure in further detail. However, interpretation of the present disclosure is not limited by the examples provided.

[Example 1 and Comparative Example 1]

While being immersed in 10 g of glycerin, 0.4 g of regenerated cellulose fibers (raw material fibers) (regenerated cellulose fibers (Lyocell) obtained by a solvent method; average fiber diameter: 11 μm, 552 tex, 2700 filament) were heated and dried at 230°C for 60 minutes. After being cooled, the fibers were washed in water and dried under reduced pressure to obtain regenerated cellulose fibers including glycerin. The ratio of the glycerin with respect to 100 parts by mass of the regenerated cellulose fibers was 0.7 parts by mass.

The obtained regenerated cellulose fibers of Example 1 and raw material fibers (Comparative Example 1) were heated for a further ten minutes in a 270°C oven. The discoloration level of the regenerated cellulose fibers after being heated was evaluated according to the following criteria. Discoloration levels were compared by deeming the color of a blank 1 (raw material fiber) to be level 1 and the color of Comparative Example 1 (in which raw material fibers were heated at 270°C for ten minutes) to be level 4. The results are shown in Table 1.

(Discoloration level)

Level 1: approximately the same color as blank 1.

Level 2: slightly more discolored than blank 1.

Level 3: slightly more discolored than level 2.

Level 4: entire fiber discolored to approximately the same extent as Comparative Example 1.

**TABLE 1**

| TABLE 1 | | | EXAMPLE 1 | COMP EX 1 |
|---|---|---|---|---|
| FIRST EMBODIMENT | REGENERATED CELLULOSE FIBER (RAW MATERIAL FIBER) | (PARTS BY MASS) | 100 | 100 |
| | COMPOUND (A) — GLYCERIN | (PARTS BY MASS) | 0.7 | 0 |
| THIRD EMBODIMENT | DISCOLORATION LEVEL AFTER HEATING AT 270°C FOR 10 MINUTES | (-) | 2 | 4 |

[Example 2 and Comparative Example 2]

100 parts by mass of regenerated cellulose fibers (raw material fibers) (regenerated cellulose fibers (Lyocell) obtained by a solvent method; average fiber diameter: 11 $\mu$m, 552 tex, 2700 filament) having a weight (W1) measured in advance (W1: approximately 0.8 g) were immersed for five seconds in an aqueous medium including boric acid (5.0 mass% boric acid aqueous solution; temperature of aqueous medium: 60°C) to absorb 200 parts by mass or more of the aqueous medium. Thereafter, the aqueous medium was dewatered by sandwiching the regenerated cellulose fibers between paper towels and compression dewatering. Then, a weight (W2) of the regenerated cellulose fibers was measured and an aqueous medium ratio was calculated from formula (1) below. The result thereof was that the aqueous medium ratio was 74 mass%.

$$\text{Aqueous medium ratio} = (W2-W1)/W1 \times 100 \ ... \ (1)$$

Next, the regenerated cellulose fibers including the aqueous medium were dried for 240 hours at 23°C to obtain regenerated cellulose fibers including boric acid. The amount of the boric acid with respect to 100 parts by mass of the regenerated cellulose fibers was 3.7 parts by mass.
The obtained regenerated cellulose fibers of Example 2 and raw material fibers (Comparative Example 2) were heated for 15 minutes in a 240°C oven. The discoloration level of the regenerated cellulose fibers after being heated was evaluated according to the same criteria as for Example 1. Discoloration levels were compared by deeming the color of a blank 1 (raw material fiber) to be level 1 and the color of Comparative Example 2 (in which raw material fibers were heated at 240°C for 15 minutes) to be level 4. The results are shown in Table 2.

**TABLE 2**

| TABLE 2 | | | EXAMPLE 2 | COMP EX 2 |
|---|---|---|---|---|
| FIRST EMBODIMENT | REGENERATED CELLULOSE FIBER (RAW MATERIAL FIBER) | (PARTS BY MASS) | 100 | 100 |
| | COMPOUND (A) — BORIC ACID | (PARTS BY MASS) | 3.7 | 0 |

(continued)

| TABLE 2 | | | EXAMPLE 2 | COMP EX 2 |
|---|---|---|---|---|
| THIRD EMBO-DIMENT | DISCOLORATION LEVEL AFTER HEATING AT 240°C FOR 15 MINUTES | (-) | 2 | 4 |

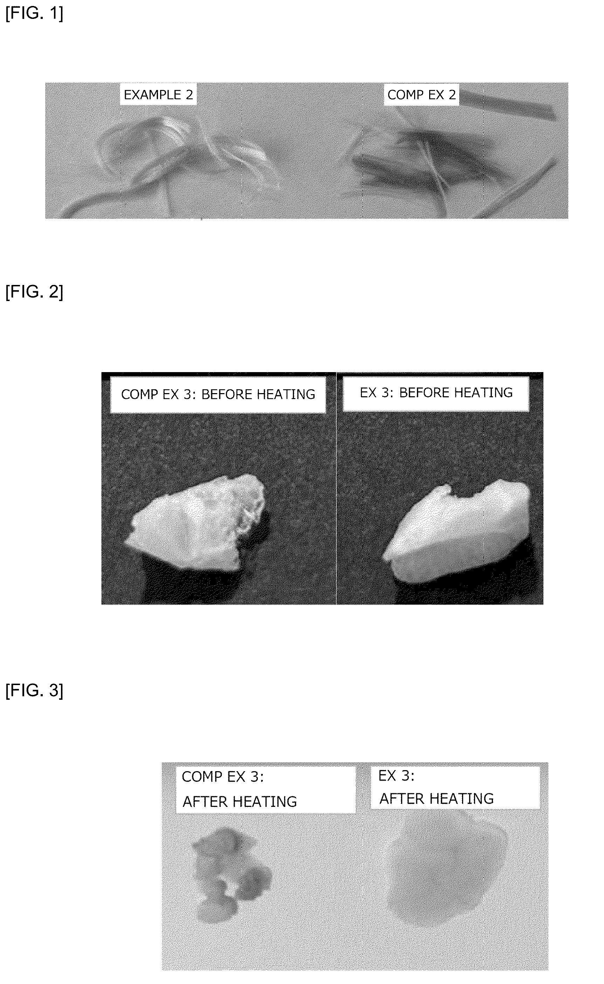

FIG. 1 shows photographs of regenerated cellulose fibers of Example 2 and Comparative Example 2 after heating. As shown in FIG. 1 and Tables 1 and 2, in the regenerated cellulose fibers according to the first embodiment which include the compound (A) (Examples 1 and 2), discoloration due to heating was inhibited to a greater degree than in the raw material fibers of Comparative Examples 1 and 2.

[Example 3 and Comparative Example 3]

Regenerated cellulose fibers including boric acid which were obtained by the same process as for Example 2 were cut to lengths of 1-2 cm. Next, 10 mass% of the regenerated cellulose fibers were blended in 90 mass% of a polypropylene resin (homopolypropylene resin, manufactured by SunAllomer Ltd., product name "PMB02A"), melt-kneaded for three minutes at a kneading temperature of 200°C and a rotation speed of 100 rpm using a small-type kneader (product name "Labo Plastomill®", manufactured by Toyoseiki Co., Ltd.) to prepare pellets of the resin composition of Example 3.

Further, other than using raw material fibers as the regenerated cellulose fibers, pellets of the resin composition of Comparative Example 3 were prepared under the same conditions as for Example 3.

Next, small pieces of approximately 0.07 g were cut out from the pellets of Example 3 and Comparative Example 3 and heated in a 240°C oven for 15 minutes. The discoloration level of the pellets after being heated was evaluated according to the following criteria. Discoloration levels were compared by deeming the color of a blank 1 (pellet before heating) to be level 1 and the color when small pieces of the pellets of Comparative Example 3 were heated at 240°C for 15 minutes to be level 4. The results are shown in Table 3.

(Discoloration level)

Level 1: approximately the same color as blank 1.

Level 2: slightly more discolored than blank 1.

Level 3: slightly more discolored than level 2.

Level 4: entire small piece discolored to approximately the same extent as Comparative Example 3.

**TABLE 3**

| TABLE 3 | | | EXAMPLE 3 | COMP EX 3 |
|---|---|---|---|---|
| SECOND EM-BODIMENT | POLYPROPYLENE RESIN | (MASS%) | 90 | 90 |
| | REGENERATED CELLULOSE FIBER OF EMBODIMENT 2 | (MASS%) | 10 | - |
| | RAW MATERIAL FIBER | (MASS%) | - | 10 |
| | PELLET PRODUCTION METHOD | (-) | MELT-KNEADING AT 200°C | MELT-KNEADING AT 200°C |
| | PELLET APPEARANCE | (-) | PALE IVORY COLOR | PALE IVORY COLOR |
| | DISCOLORATION LEVEL AFTER HEATING AT 240°C FOR 15 MINUTES | (-) | 2 | 4 |

FIG. 2 shows photographs of small pieces of the pellets of Example 3 and Comparative Example 3 before heating. As shown in FIG. 2, there are no significant differences in the appearance of the pellets obtained in Example 3 and Comparative Example 3 (before heating), with pellets from both being a pale ivory color. Further, FIG. 3 shows photographs of pellets of Example 3 and Comparative Example 3 after heating. As shown in FIG. 3 and Table 3, it was discovered that the pellets of resin composition (I) according to the second embodiment have fewer appearance defects due to heating than the pellets of the resin composition of Comparative Example 3.

[Example 4 and Comparative Example 4]

Regenerated cellulose continuous fibers (raw material continuous fibers) were immersed in an aqueous medium including boric acid (boric acid concentration 3.8 mass%, aqueous medium temperature 25°C) and the aqueous medium was absorbed by the regenerated cellulose continuous fibers. Thereafter, the aqueous medium was dewatered (the aqueous medium ratio after dewatering, calculated from formula (1) above, was 36%), and non-contact drying (drying temperature: 180°C) and contact drying (drying temperature: 180°C) were carried out to obtain the regenerated cellulose continuous fibers of Example 4 (regenerated cellulose continuous fibers including boric acid). The amount of the boric acid with respect to 100 parts by mass of the regenerated cellulose continuous fibers of Example 4 was 1.4 parts by mass.
Note that a device (minisizer, manufactured by Kaji Group, product name: "DCC001P") provided with a storage part for storing raw material continuous fibers, an immersion part including a container for accommodating an aqueous medium, a drying part including a non-contact drying device and a contact drying device, and a recovery part for recovering the continuous fibers after being processed was used to perform the series of processes described above while winding in the continuous fibers toward the recovery part (winding-in speed: 20 m/minute).
Next, 67.9 mass% of a polypropylene resin (homopolypropylene resin, manufactured by SunAllomer Ltd., product name "PMB02A") and 2.1 mass% of a maleic anhydride-modified polypropylene resin (manufactured by SK Functional Polymer, product name "Orevac CA100") were mixed, loaded in a twin-screw extruder (manufactured by The Japan Steel Works, Ltd., product name "TEX30α"), and then melt-kneaded with a cylinder temperature of 280°C to obtain a melted-state mixture. The regenerated cellulose continuous fibers including boric acid and having passed through a crosshead die were impregnated with the melted-state mixture such that the continuous fibers accounted for 30 mass% thereof. Thereafter, the mixture was shaped with a shaping nozzle on the crosshead die outlet, the shape was tidied up with a formatting roll, and then cut into 7mm lengths with a pelletizer to obtain pellets of a resin composition including polypropylene and regenerated cellulose fibers including boric acid. Further, as Comparative Example 4, pellets of a resin composition of raw material continuous fibers were obtained under the same conditions as described above.
Next, molded articles (ISO multipurpose test pieces) were obtained by injection molding the resin compositions (pellets) of Example 4 and Comparative Example 4 under the conditions described below. Various mechanical properties of the obtained molded articles were measured under the conditions described below. Further, the thermal expansion coefficient was measured under the conditions described below. The results are shown in Table 4.

(Molding conditions)

Molding machine: product name "α-S150iA", manufactured by FANUC Corporation

Test piece: ISO multipurpose test piece

Molding temperature: 200°C

Mold temperature: 60°C

<Measurement of tensile strength>

Tensile strength was measured using the obtained ISO multipurpose test pieces in compliance with ISO 527-1, 2. Specifically, measurements were performed using a tensile testing machine (product name "Autograph® AG-20kNXD Plus", manufactured by Shimadzu Corporation) with conditions of: a temperature of 23°C; a test speed of 5 mm/min.; and a chuck spacing (span) of 115 mm.

<Measurement of Charpy impact strength>

Measurements were performed using the obtained ISO multipurpose test pieces in compliance with ISO 179/1eA. Specifically, measurements were performed using a digital impact testing machine (product name "Impact testing machine No. 258-L IMPACT TESTER", manufactured by Yasuda Seiki Co., Ltd.) with conditions of: a testing temperature of 23°C; a measurement mode in which a V-type notch is attached; and a hammer capacity of 4J.

<Measurement of bending strength and bending elastic modulus>

Measurements were performed using the obtained ISO multipurpose test pieces in compliance with ISO 178. Specifically, measurements were performed using a bending testing machine (product name "Bendograph II", manufactured by Toyoseiki Co., Ltd.) with conditions of: a temperature of 23°C; a test speed of 2 mm/min.; and a chuck spacing (span) of 64 mm.

<Measurement of thermal expansion coefficient>

The thermal expansion coefficient (240°C × 5 minutes, 260°C × 3 minutes, 260°C × 5 minutes, 280°C × 2 minutes) of molded articles cut out at a section 5 cm from the gate side of the obtained ISO multipurpose sets pieces was measured.

**TABLE 4**

| TABLE 4 | | | | EXAMPLE 4 | COMP EX 4 |
|---|---|---|---|---|---|
| RESIN COMPOSITION (I) | | POLYPROPYLENE RESIN | (MASS%) | 67.9 | 67.9 |
| | | ACID-MODIFIED POLYPROPYLENE RESIN | | 2.1 | 2.1 |
| | | REGENERATED CELLULOSE CONTINUOUS FIBER | | 30 | |
| | | RAW MATERIAL CONTINUOUS FIBER | | | 30 |
| | | TOTAL | | 100 | 100 |
| MOLDED ARTICLE | MECHANICAL PROPERTIES | BENDING STRENGTH | (MPa) | 115 | 116 |
| | | BENDING ELASTIC MODULUS | (MPa) | 6500 | 6100 |
| | THERMAL EXPANSION COEFFICIENT | 240°C×5 MIN. (THICKNESS DIRECTION/WIDTH DIRECTION) | (%) | 119/105 | 238/125 |
| | | 260°C×3 MIN. (THICKNESS DIRECTION/WIDTH DIRECTION) | | 119/103 | 167/110 |
| | | 260°C×5 MIN. (THICKNESS DIRECTION/WIDTH DIRECTION) | | 119/110 | 262/125 |
| | | 280°C×2 MIN. (THICKNESS DIRECTION/WIDTH DIRECTION) | | 119/100 | 143/105 |

As shown in Table 4, molded articles of a resin composition including the regenerated cellulose continuous fibers according to the first embodiment (molded article according to the second embodiment) maintained approximately the same mechanical properties as molded articles of the raw material continuous fibers and also had an extremely low thermal expansion coefficient. Due thereto, it is anticipated that the resin composition according to the second embodiment can inhibit the spring back phenomenon (phenomenon in which resin, upon being discharged from an extruder die, expands in the thickness direction/width direction) when irregular shapes are extruded, and can also be anticipated to be applied to molded articles obtained by extruding irregular shapes.

**INDUSTRIAL APPLICABILITY**

When the regenerated cellulose fiber according to the first embodiment is blended in a resin as a resin reinforcer, discoloration due to heating is unlikely to occur when a resin composition is prepared or when the resin composition is molded. The regenerated cellulose fiber is industrially applicable as a reinforcer which enables a molded article with small discoloration to be obtained.

For the resin composition according to the second embodiment, it is unlikely that appearance defects due to heating occur during molding. Due thereto, a molded article of the resin composition according to the second embodiment can be suitably used in various different fields such as automobiles, electric and electronics, OAs, home appliances, and general merchandise, etc.

**Claims**

1. A regenerated cellulose fiber for resin reinforcement, the fiber comprising at least one compound (A) selected from a monohydric or polyhydric alcohol and a weak acid.

2. The regenerated cellulose fiber according to claim 1, wherein the ratio of the compound (A) with respect to 100 parts by mass of the regenerated cellulose fiber is 0.01-20 parts by mass.

3. The regenerated cellulose fiber according to claim 1 or 2, wherein the alcohol comprises glycerin and the weak acid comprises boric acid.

4. A resin composition comprising: a regenerated cellulose fiber comprising at least one compound (A) selected from a monohydric or polyhydric alcohol and a weak acid; and a thermoplastic resin.

5. A resin composition comprising: a regenerated cellulose fiber comprising at least one compound (A) selected from a monohydric or polyhydric alcohol and a weak acid; and a thermosetting resin.

6. The resin composition according to claim 4 or 5, wherein the ratio of the compound (A) with respect to 100 parts by mass of the regenerated cellulose fiber is 0.01-20 parts by mass.

7. The resin composition according to claim 4 or 5, wherein the alcohol comprises glycerin and the weak acid comprises boric acid.

8. A pellet of the resin composition according to claim 4.

9. A molded article of the resin composition according to claim 4 or 5.

10. A method for producing a discoloration-inhibited regenerated cellulose fiber,
the method comprising heating the regenerated cellulose fiber according to claim 1 or 2 at 200-300°C.

11. The method for producing a regenerated cellulose fiber according to claim 10, wherein the heating comprises applying a thermal load of 200-300°C to at least a surface of the regenerated cellulose fiber.

12. A method for producing the pellet according to claim 8, wherein the method comprises:

impregnating the regenerated cellulose fiber with the thermoplastic resin, which is melted; or
melt-kneading the regenerated cellulose fiber and the thermoplastic resin.

13. The method for producing a pellet according to claim 12, wherein the temperature of the melted thermoplastic resin or the temperature at the time of the melt-kneading is 200-300°C.

14. The method for producing a pellet according to claim 12, wherein the impregnating of the melted thermoplastic resin or the melt-kneading comprises reacting the regenerated cellulose fiber and the compound (A).

[FIG. 1]

[FIG. 2]

[FIG. 3]

## INTERNATIONAL SEARCH REPORT

| International application No. |
|---|
| **PCT/JP2024/018975** |

**A. CLASSIFICATION OF SUBJECT MATTER**

*C08L 1/02*(2006.01)i; *C08J 3/215*(2006.01)i; *C08K 3/38*(2006.01)i; *C08K 5/053*(2006.01)i; *C08L 101/00*(2006.01)i; *D06M 11/82*(2006.01)i; *D06M 13/144*(2006.01)i

FI: C08L1/02; C08K5/053; C08L101/00; C08K3/38; C08J3/215; D06M13/144; D06M11/82

According to International Patent Classification (IPC) or to both national classification and IPC

**B. FIELDS SEARCHED**

Minimum documentation searched (classification system followed by classification symbols)

C08L1/02; C08J3/215; C08K3/38; C08K5/053; C08L101/00; D06M11/82; D06M13/144

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-66789 A (ASAHI KASEI KABUSHIKI KAISHA) 30 April 2021 (2021-04-30) paragraphs [0021], [0073]-[0074], [0099], [0109], [0129], [0140], [0164], examples, table 2 | 1-2, 4-6, 8-14 |
| A | | 3, 7 |
| X | JP 2001-120477 A (ASAHI KASEI KABUSHIKI KAISHA) 08 May 2001 (2001-05-08) claims 1, 4, paragraphs [0012], [0015], [0017], examples | 1-2, 4, 6, 9 |
| A | | 3, 5, 7-8, 10-14 |
| X | JP 2022-12957 A (KURASHIKI BOSEKI K.K.) 18 January 2022 (2022-01-18) claims 1, 3, paragraph [0046], example 1 | 1-2 |
| A | | 3-14 |
| A | CN 112626673 A (SUZHOU CITY ERKAI TEXTILE CO., LTD.) 09 April 2021 (2021-04-09) paragraphs [0055]-[0056] | 1-14 |

✓ Further documents are listed in the continuation of Box C.    ✓ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/018975**

| C. | DOCUMENTS CONSIDERED TO BE RELEVANT | |
|---|---|---|
| Category* | Citation of document, with indication, where appropriate, of the relevant passages | Relevant to claim No. |
| A | JP 2-168958 A (NIPPON CONTACT LENS KK) 29 June 1990 (1990-06-29) examples | 1-14 |

Form PCT/ISA/210 (second sheet) (July 2022)

**INTERNATIONAL SEARCH REPORT**
Information on patent family members

International application No.

**PCT/JP2024/018975**

| Patent document cited in search report | | | Publication date (day/month/year) | Patent family member(s) | | | Publication date (day/month/year) |
|---|---|---|---|---|---|---|---|
| JP | 2021-66789 | A | 30 April 2021 | (Family: none) | | | |
| JP | 2001-120477 | A | 08 May 2001 | (Family: none) | | | |
| JP | 2022-12957 | A | 18 January 2022 | CN | 113882033 | A | |
| CN | 112626673 | A | 09 April 2021 | (Family: none) | | | |
| JP | 2-168958 | A | 29 June 1990 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2017095831 A